# EUROPÄISCHE PATENTANMELDUNG

(11) **EP 4 215 826 A1**
(43) Veröffentlichungstag der Anmeldung: **26.07.2023**
(21) Anmeldenummer: 23152125.3
(22) Anmeldetag: 18.01.2023
(51) Int. Cl.: F24D 19/10, G05D 23/19

(54) **VERFAHREN ZUR KONFIGURATION EINER HEIZUNGSANLAGE, COMPUTERPROGRAMM, REGEL- UND STEUERGERÄT, HEIZGERÄT UND VERWENDUNG VON DATEN**

(30) Priorität: 20.01.2022 DE 102022101313
(71) Anmelder: Vaillant GmbH, 42859 Remscheid NRW (DE)
(72) Erfinder: Bahlmann, Hermann-Josef, 49762 Lathen (DE); Frank, Matthias, 58454 Witten (DE); Reinert, Andreas, 58455 Witten (DE)
(74) Vertreter: Popp, Carsten

(57) **Zusammenfassung**

Es wird ein Verfahren zur Konfiguration einer Heizungsanlage (1) vorgeschlagen, umfassend zumindest die folgenden Schritte:
a) Erfassen von Daten aus einem Protokoll eines hydraulischen Abgleiches der Heizungsanlage (1),
b) Konfiguration und Abstimmung von Wärmeerzeuger und Regelung der Heizungsanlage (1) anhand der in Schritt a) erfassten Daten.

Gemäß einer weiteren vorteilhaften Ausgestaltung kann die Heizungsanlage (1)zur Durchführung des Schrittes a) eine Datenverbindung zu einem Computer aufbauen, auf dem ein Protokoll eines hydraulischen Abgleichs gespeichert ist, oder dem ein Protokoll eines hydraulischen Abgleichs zugänglich ist. Der Computer kann beispielsweise ein mobiles Endgerät, beispielsweise ein Smartphone, sein. Sofern ein Protokoll des hydraulischen Abgleichs auf dem Smartphone gespeichert ist, kann dieses an das Heizgerät (2) übermittelt werden. Alternativ oder kumulativ kann ein in Papierform vorliegendes Protokoll eines hydraulischen Abgleiches durch eine Kamera des mobilen Endgerätes fotografiert/ gescannt und anschließend dem Heizgerät (2) übermittelt werden.

## Beschreibung

Die Erfindung betrifft ein Verfahren zur Konfiguration einer Heizungsanlage, ein Computerprogramm, ein Regel- und Steuergerät, ein Heizgerät und eine Verwendung von Daten.

Bei einer Inbetriebnahme einer Heizungsanlage, beispielsweise eines Heizgerätes, sind eine Vielzahl von Konfigurationen vorzunehmen, um einen sicheren und energieeffizienten Betrieb zu gewährleisten. Hierzu zählen Informationen über eine Norm-Außentemperatur am Aufstellort, (Soll-)Raumtemperaturen sowie eine Vielzahl von Informationen bzw. Parametern, die mit der Auslegung der Heizungsanlage in Verbindung stehen. Diese können auch den Heizkreislauf und dessen Auslegungszustand betreffen. Die Informationen dienen bei einer Heizungsanlage einer Optimierung der Regelung/ Steuerung des Heizsystems und dessen Wärmeerzeugers.

Diese Informationen müssen im Rahmen einer Inbetriebnahme einer Heizungsanlage aufwendig in die Regelungselektronik eingebracht werden. Dies erfordert eine gute Kenntnis der ausführenden Fachkraft über die konkrete / die konkrete Heizungsanlage und deren Bedienkonzept. In Folge werden Heizungsanlagen häufig mit Werkseinstellungen betrieben, die zwar einen sicheren Betrieb in normalen Betriebssituationen gewährleisten können, jedoch in Grenzsituationen (beispielsweise eine lange Kaltphase) unzureichend sein und zudem eine mangelnde Energieeffizienz verbunden mit erhöhten Kosten mit sich bringen können. Auch menschliche Fehler bei der Eingabe von Informationen können zu vorgenannten Problemen führen.

Hiervon ausgehend ist es Aufgabe der Erfindung, ein Verfahren zur Konfiguration einer Heizungsanlage und eine Heizungsanlage vorzuschlagen, die die geschilderten Probleme des Standes der Technik zumindest teilweise überwindet. Insbesondere soll eine möglichst schnelle und exakte Konfiguration der Heizungsanlage mit geringem Fehlerpotential ermöglicht werden.

Zudem soll die Erfindung die Komplexität einer Heizungsanlage zumindest nicht wesentlich erhöhen und nur geringe bauliche Veränderungen an einer Heizungsanlage erfordern und eine einfache Integration in einen bestehenden Produktionsprozess ermöglichen.

Diese Aufgaben werden gelöst durch die Merkmale der unabhängigen Patentansprüche. Weitere vorteilhafte Ausgestaltungen der hier vorgeschlagenen Lösung sind in den unabhängigen Patentansprüchen angegeben. Es wird darauf hingewiesen, dass die in den abhängigen Patentansprüchen aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt ein Verfahren zur Konfiguration einer Heizungsanlage, umfassend zumindest die folgenden Schritte:
a) Erfassen von Daten aus einem Protokoll eines hydraulischen Abgleiches der Heizungsanlage,
b) Konfiguration und Abstimmung von Wärmeerzeuger und Regelung (insbesondere des Regel- und Steuergeräts) der Heizungsanlage anhand der in Schritt a) erfassten Daten.

Die Schritte a) und b) werden bei einem regulären Verfahrensablauf mindestens einmal in der angegebenen Reihenfolge durchgeführt. Es ist auch möglich Schritt a) mehrmals durchzuführen und anschließend Schritt b). Gleichfalls möglich kann die Ausführung von Schritt a) und Schritt b) mehrmals wiederholt werden.

Das vorgeschlagene Verfahren dient einer besonders einfachen, schnellen und sicheren Konfiguration einer Heizungsanlage. Insbesondere kann durch eine besonders genaue Konfiguration die Betriebssicherheit und die Energieeffizienz einer Heizungsanlage gesteigert werden. Zudem kann die Standzeit der Heizungsanlage durch die besonders genaue Konfiguration und die damit verbundene Vermeidung von unsicheren Betriebszuständen vorteilhaft gesteigert werden.

Die Heizungsanlage ist insbesondere gekennzeichnet durch ein Heizgerät und einen verbundenen Versorgungskreislauf zum Wärmetransport, der einen hydraulischen Abgleich für einen effizienten Betrieb erfordert. Der Versorgungskreislauf umfasst insbesondere ein flüssiges Medium, dem Wärme zu- und abgeführt werden bzw. welches zugegebene Wärme transportieren kann (Wärmeträger). Hierfür kann das Medium in dem, bevorzugt geschlossenen, Versorgungskreislauf bedarfsgerecht zirkulieren.

Die Heizungsanlage umfasst in der Regel einen Heizkreislauf mit einer Umwälzpumpe. Zumeist umfasst eine Heizungsanlage ein Heizgerät aufweisend einen Wärmeerzeuger, wie einen Brenner für Öl, Gas oder Wasserstoff als Brennstoff oder einer Wärmepumpe. Der vom Wärmeerzeuger erzeugte Wärmestrom kann auf einen Wärmeträger in einem Heizkreislauf übertragen und so Verbrauchern (z. B. Heizkörper) im Heizkreislauf zugeführt werden. Als Wärmeträger kommt zumeist (Heizungs-)Wasser zum Einsatz.

Im Heizkreislauf kann eine Umwälzpumpe angeordnet sein, die neben dem Wärmeerzeuger als wichtigster Aktor eines Heizkreislaufes angesehen werden kann. Eine Umwälzpumpe kann einen Volumenstrom im Heizkreislauf erzeugen und damit einen vom Wärmeerzeuger bereitgestellten Wärmestrom den angeschlossenen Verbrauchern im Heizkreislauf zuführen. Der Volumenstrom wird durch die Umwälzpumpe realisiert, indem diese einen Druck (auch als Differenzdruck zwischen Druck- und Saugseite der Umwälzpumpe bezeichnet) aufbaut. Dem von der Umwälzpumpe realisierten Druck wirkt ein Druckverlust des Heizkreislaufes entgegen. Der Druckverlust ist dabei vom aktuellen Öffnungsgrad des Heizkreislaufes abhängig, wobei der Öffnungsgrad ein Maß für die Anzahl der in den Heizkreislauf eingebundenen Verbraucher ist. Die Umwälzpumpe kann in der Regel in verschiedenen Pumpenbetriebsarten betrieben werden und sollte im Rahmen einer Konfiguration einer Heizungsanlage auf den individuellen Bedarf des konkreten Heizkreislaufes abgestimmt werden.

Im Rahmen der Planung einer Heizungsanlage sollte eine Auslegung desselben erfolgen, die sicherstellen soll, dass die Heizungsanlage ausreichend dimensioniert ist, um ein Gebäude zu versorgen. Hierzu werden in der Regel Daten hinsichtlich der konkreten klimatischen Gegebenheiten am Standort und zu den baulichen Voraussetzungen des konkreten Gebäudes herangezogen. Im Rahmen der Auslegung kann beispielsweise eine Nennleistung eines Heizgerätesund für jeden zu versorgenden Raum eine Größe eines Verbrauchers (Konvektor, Flächenheizung etc.) bestimmt werden, um eine sichere Versorgung des Gebäudes durch die Heizungsanlage zu gewährleisten. Anhand der Auslegung der Heizungsanlage (insbesondere anhand deren Dimensionierung, Ausstattung und/oder Betriebsweise) kann insbesondere eine vorgegebene Wärme- und/oder Kühlleistung unter den vorbestimmten Gegebenheiten eingestellt bzw. sichergestellt werden.

Bei einer Heizungsanlage können im Rahmen der Auslegung eine (Maximal-)Leistung eines Wärmeerzeugers festgelegt und die über einen Heizkreislauf zu verbindenden Verbraucher (Heizkörper, Konvektoren, Fußboden- oder Wandheizungselemente) dimensioniert werden bzw. sein, um unter den konkreten klimatischen Bedingungen am Standort und den baulichen Gegebenheiten des zu versorgenden Gebäudes (insbesondere dessen Wärmedämmung) eine sichere Wärmversorgung zu gewährleisten. Für die Auslegung sind verschiedene Verfahren zur Durchführung bekannt, beispielsweise können für jeden zu versorgenden Raum die konkreten Wand-, Fenster-, Decken- und/oder Fußbodenflächen herangezogen werden, um den konkreten (Leistungs-)Bedarf zu ermitteln und daraufhin einen konkreten Verbraucher (beispielsweise Heizkörper) auszuwählen. Gemäß eines anderen (Näherungs-)Verfahrens können (nur) die Grundfläche aller zu versorgender Räume und näherungsweise Angaben zu den baulichen Gegebenheiten des Gebäudes (Wärmedämmung bzw. Wärmeverluste) einbezogen werden, um den Bedarf zu ermitteln und die Heizungsanlage zu dimensionieren.

Nach der Auslegung kann die Heizungsanlage installiert werden. Nach der Installation und vor der ersten Inbetriebnahme sollte die Heizungsanlage konfiguriert werden. Insbesondere soll ein hydraulischer Abgleich der Heizungsanlage durchgeführt werden.

Bei einer Konfiguration einer Heizungsanlage können eine Vielzahl von Parametern hinterlegt werden, die einer Konfiguration und Abstimmung von Wärmeerzeuger, Heizkreislauf und Regelung der Heizungsanlage dienen. Durch den hydraulischen Abgleich wird gewährleistet, dass sich in einem (verzweigten) Heizkreislauf die erforderlichen Volumenströme Wärmeträger einstellen, die für eine optimale Versorgung der einzelnen Räume notwendig sind.

Die Durchführung des hydraulischen Abgleichs erfolgte in der Vergangenheit manuell durch eine Fachkraft. Beispielsweise können im Rahmen eines hydraulischen Abgleichs Drosselventile in den unterschiedlichen Verzweigungen des Heizkreislaufes derart eingestellt werden, dass sich ein optimaler bzw. gleichmäßiger Volumenstrom des Wärmeträgers einstellen kann. Neuere Heizgeräte oder Umwälzpumpen können inzwischen Softwarelösungen zur Unterstützung der Fachkraft bei einem hydraulischen Abgleich aufweisen. Hierzu kann beispielsweise eine Funkverbindung eines mobilen Endgerätes (beispielsweise eines Smartphones) mit der Umwälzpumpe und/oder dem Heizgerät hergestellt werden, und der Fachkraft bei der Einstellung der Drossel mitgeteilt werden, wenn ein optimaler Bereich erreicht ist.

Im Ergebnis der Auslegung der Heizungsanlage und/ oder des hydraulischen Abgleiches liegen eine Reihe von Parametern vor, die für eine Konfiguration der Heizungsanlage wichtig sein können. Am Beispiel einer Heizungsanlage können dabei insbesondere einer oder mehrere der nachfolgenden Parameter relevant sein:
- erforderliche Wärmeleistung für das Heizsystem im Auslegungszustand: die maximale Wärmeleistung, die ein konkreter Heizkreislauf mit seinen Verbrauchern für ein konkretes Gebäude maximal benötigt. Bei vielen Heizgeräten bzw. Wärmeerzeugern kann eine erforderliche Wärmeleistung eingegeben und damit die maximale Leistung des Wärmeerzeugers geregelt werden,
- Heizzeitfenster: diese hängen im Wesentlichen von der Qualität der Wärmedämmung eines Gebäudes ab und können beispielsweise über das Verhältnis von Wärmebedarf zur Wohnfläche bestimmt werden,
- Norm-Außentemperatur: die Norm-Außentemperatur ist vom konkreten Aufstellungsort der Anlage abhängig und kann entsprechenden Tabellen entnommen werden.
- Erforderliche Vorlauftemperatur für die Heizungsanlage im Auslegungszustand: da ein Heizkreislauf ein Wärmetauscher-System ist, kann einem hydraulischen Abgleich auch eine erforderliche Vorlauftemperatur des Heizkreislaufes entnommen werden, um eine ausreichende Versorgung aller Verbraucher des Heizkreislaufes zu gewährleisten. Anhand einer bekannten Norm-Außentemperatur und erforderlicher Vorlauftemperatur kann eine erforderliche Heizkurve für das Heizgerät gewählt werden,
- erforderlicher Volumenstrom im Heizkreislauf für den Auslegungszustand: in Kenntnis einer maximalen Heizleistung, einer erforderlichen Vorlauftemperatur und einer sich einstellenden Temperaturspreizung kann ein erforderlicher Volumenstrom für den Auslegungsfall ermittelt werden. Dieser Volumen Strom wird mithilfe der Umwälzpumpe aufgebaut.
- Pumpenbetriebsart: die Pumpenbetriebsart ist eine einstellbare Strategie der Umwälzpumpe, um den erforderlichen Volumen Strom aufzubauen.
- Erforderliche Raumtemperatur / Raumregler: durch den hydraulischen Abgleich und die Auslegung sind Raumanzahl, Raumtyp und auch die jeweilige Raum-Soll-Temperatur bekannt und es wird ermöglicht, einen idealen Regelwert für den Raum Sollwert abzuleiten. Im Rahmen der Auslegung einer Heizungsanlage können für jedem Raum (ggf. einzelne) Raumsollwerttemperaturen festgelegt sein, die für den Betrieb der Heizungsanlage relevant sein können und somit ggf. für eine Anpassung in Schritt b) herangezogen werden können.
- Fußpunkttemperatur: die Fußpunkttemperatur bezeichnet eine Mindesttemperatur, die die Verbraucher im Heizkreislauf benötigen, um Wärme abzugeben. Beispielsweise bei einem auf Konfektion basierenden Heizkörper stellt die Fußpunkttemperatur die Mindesttemperatur-Dauer, bei der sich eine freie Konfektion einstellt, und so die Wärme im Raum verteilt werden kann.
- Heizgrenztemperatur: die Heizgrenztemperatur bezeichnet eine Außentemperatur, oberhalb derer der Heizbetrieb beendet werden kann. Die Heizgrenztemperatur ist insbesondere vom Aufstellungsort und damit verbunden der Norm Außentemperatur und einer Interpretation des Dämmstandards des zu versorgenden Gebäudes abhängig.
- Temperaturen/Durchheizen: dieser Parameter bezeichnet eine Außentemperatur, bei der eingegebene Zeitfenster ignoriert werden und der Wärmeerzeuger durchgehend laufen muss, um ein Auskühlen des Gebäudes zu verhindern.

Die genannten Parameter können einem Protokoll des hydraulischen Abgleichs entnommen werden. Als "Protokoll" wird insbesondere eine Messwertaufzeichnung verstanden, die im Rahmen eines hydraulischen Abgleichs erstellt wurde. Gemäß einem Schritt a) des hier vorgeschlagenen Verfahrens erfolgt ein Erfassen von Daten aus einem Protokoll eines hydraulischen Abgleiches der Heizungsanlage.

Gemäß einer Ausgestaltung können die erforderlichen Daten aus dem Protokoll des hydraulischen Abgleichs in das Heizgerät eingegeben werden. Eine derartige Ausgestaltung ist besonders einfach und bei jedem Heizgerät umsetzbar.

Gemäß einer vorteilhaften Ausgestaltung können die in Schritt a) zu erfassenden Daten in digitaler Form vorliegen. Ein Erfassen kann so in automatisierter Form erfolgen.

Gemäß einer weiteren vorteilhaften Ausgestaltung kann in einem zusätzlichen Schritt c) ein hydraulischer Abgleich mithilfe eines Computers durchgeführt werden. Der Einsatz des Computers kann sich dabei insbesondere auf ein automatisiertes Erfassen von Daten für und ein automatisiertes Erstellen des Protokolls des hydraulischen Abgleichs beziehen. Gleichfalls kann der Computer die Aufnahme von Messwerten unterstützen durch ein Verbringen der Heizungsanlage in einen zu messenden Betriebszustand, beispielsweise kann ein Computer hierzu die Umwälzpumpe dazu veranlassen einen bestimmten Druck aufzubauen oder eine in eine bestimmte Pumpenbetriebsart zu wechseln. Eine Durchführung des Schrittes c) sollte entsprechend den Schritten a) und b) vorgelagert sein.

Gemäß einer weiteren vorteilhaften Ausgestaltung kann die Heizungsanlage zur Durchführung des Schrittes a) eine Datenverbindung zu einem Computer aufbauen, auf dem ein Protokoll eines hydraulischen Abgleichs gespeichert ist, oder dem ein Protokoll eines hydraulischen Abgleichs zugänglich ist. Der Computer kann beispielsweise ein mobiles Endgerät, beispielsweise ein Smartphone, sein. Sofern ein Protokoll des hydraulischen Abgleichs auf dem Smartphone gespeichert ist, kann dieses an das Heizgerät übermittelt werden. Alternativ oder kumulativ kann ein in Papierform vorliegendes Protokoll eines hydraulischen Abgleiches durch eine Kamera des mobilen Endgerätes fotografiert/ gescannt und anschließend dem Heizgerät übermittelt werden.

Alternativ oder kumulativ kann zudem eine Software zur Texterkennung auf dem mobilen Endgerät und/ oder dem Heizgerät genutzt werden, um eine automatisierte Auswertung des Protokolls des hydraulischen Abgleichs durchzuführen.

Gemäß einer weiteren vorteilhaften Ausgestaltung kann künstliche Intelligenz/maschinelles Lernen in die Auswertung eines Protokolls des hydraulischen Abgleichs einbezogen werden, um die aus dem Protokoll erhältlichen Daten zu interpretieren und/ oder der Konfiguration des Heizgerätes zuzuordnen. Es versteht sich, dass hierfür die Daten verschiedener Auswertungen von Protokollen hydraulischer Abgleiche zusammengeführt werden müssen. Vorteilhaft können so Probleme bei einer automatisierten Auswertung hinsichtlich Anordnung der Daten und Verwendung verschiedener Terminologien vermieden werden.

Gemäß einem Schritt b) erfolgt ein Konfigurieren und Abstimmen von Wärmeerzeuger und Regelung der Heizungsanlage anhand der in Schritt a) erfassten Daten. Insbesondere können hierzu die in Schritt a) erfassten Daten, also Parameter oder Parameterbereiche und daraus abzuleitende einzustellende Betriebsarten in entsprechende Positionen einer Datenbank (eines Regel- und Steuergerätes) eines Heizgerätes übertragen werden.

Gemäß einer vorteilhaften Ausgestaltung können im Rahmen der Durchführung des Schrittes b) auch die in Schritt a) erfassten Daten interpretiert und angepasst werden, so dass diese einer Eingabe in eine Datenbank (eines Regel- und Steuergerätes) eines Heizgerätes zugänglich sind.

Nach einem weiteren Aspekt wird auch ein Computerprogramm (-produkt) vorgeschlagen, umfassend Befehle, die einen Computer dazu veranlassen, ein hier vorgestelltes Verfahren durchzuführen. Das Computerprogramm kann bei Ausführung durch einen Computer insbesondere alle oder einen Teil der vorgeschlagenen Verfahrensschritte durchführen:
a) Erfassen von Daten aus einem Protokoll eines hydraulischen Abgleichs, gegebenenfalls unter Einbeziehung von Texterkennung und/ oder künstlicher Intelligenz,
b) Konfigurieren und Abstimmen von Wärmeerzeuger und Regelung der Heizungsanlage anhand der in Schritt a) erfassten Daten, und
c) Durchführen eines hydraulischen Abgleichs, zumindest teilweise gegebenenfalls unter Ausgabe von Anweisungen an eine Fachkraft.

Hierfür kann das Computerprogramm gegebenenfalls eine Verbindung zu einem Netzwerk, wie dem Internet, herstellen und/ oder einer Datenverbindung zu einem mobilen Endgerät und/ oder zu einem (Regel- und Steuergerätes) eines Heizgerätes aufbauen.

Nach einem weiteren Aspekt wird auch ein Regel- und Steuergerät, insbesondere eines Heizgerätes, vorgeschlagen, eingerichtet zur Durchführung eines hier vorgestellten Verfahrens. Das Regel- und Steuergerät kann hierzu beispielsweise einen Prozessor aufweisen bzw. über diesen verfügen. In diesem Zusammenhang kann der Prozessor beispielsweise das auf einem Speicher (des Regel- und Steuergeräts) hinterlegte Verfahren ausführen. Auf dem Speicher (des Regel- und Steuergeräts) können vorteilhaft auch Daten einer künstlichen Intelligenz betreffend die Auswertung eines Protokolls eines hydraulischen Abgleichs hinterlegt sein.

Nach einem weiteren Aspekt wird auch eine Heizungsanlage mit einem hier vorgestellten Regel- und Steuergerät vorgeschlagen. Das Regel- und Steuergerät ist häufig Bestandteil eines Heizgerätes einer Heizungsanlage.

Nach einem weiteren Aspekt wird eine Verwendung der Daten eines hydraulischen Abgleichs zur Konfiguration einer Heizungsanlage vorgeschlagen.

Die im Zusammenhang mit dem Verfahren erörterten Details, Merkmale und vorteilhaften Ausgestaltungen können entsprechend auch bei dem hier vorgeschlagenen Computerprogramm, dem Regel- und Steuergerät, der Heizungsanlage und/ oder der Verwendung auftreten und umgekehrt. Insoweit wird auf die dortigen Ausführungen zur näheren Charakterisierung der Merkmale vollumfänglich Bezug genommen.

Hier werden somit ein Verfahren zur Konfiguration einer Heizungsanlage, ein Computerprogramm, ein Regel- und Steuergerät, eine Heizungsanlage und eine Verwendung von Daten angegeben, welche die mit Bezug auf den Stand der Technik geschilderten Probleme zumindest teilweise lösen. Insbesondere tragen das Verfahren, das Computerprogramm, das Regel- und Steuergerät, die Heizungsanlage sowie die Verwendung zumindest dazu bei, eine besonders einfache, schnelle und wenig fehleranfällige Möglichkeit zur Konfiguration einer Heizungsanlage vorzuschlagen, und zudem den Betrieb der Heizungsanlage hinsichtlich Energieeffizienz und Sicherheit zu verbessern.

Zudem kann die Erfindung besonders einfach umgesetzt werden, da gegebenenfalls keine baulichen Veränderungen an einer Heizungsanlage vorzunehmen sind und eine rein softwareseitige Implementation der Erfindung in einer Heizungsanlage möglich erscheint.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: einen Ablauf eines hier vorgeschlagenen Verfahrens, und
- Fig. 2:: eine hier vorgeschlagene Heizungsanlage.

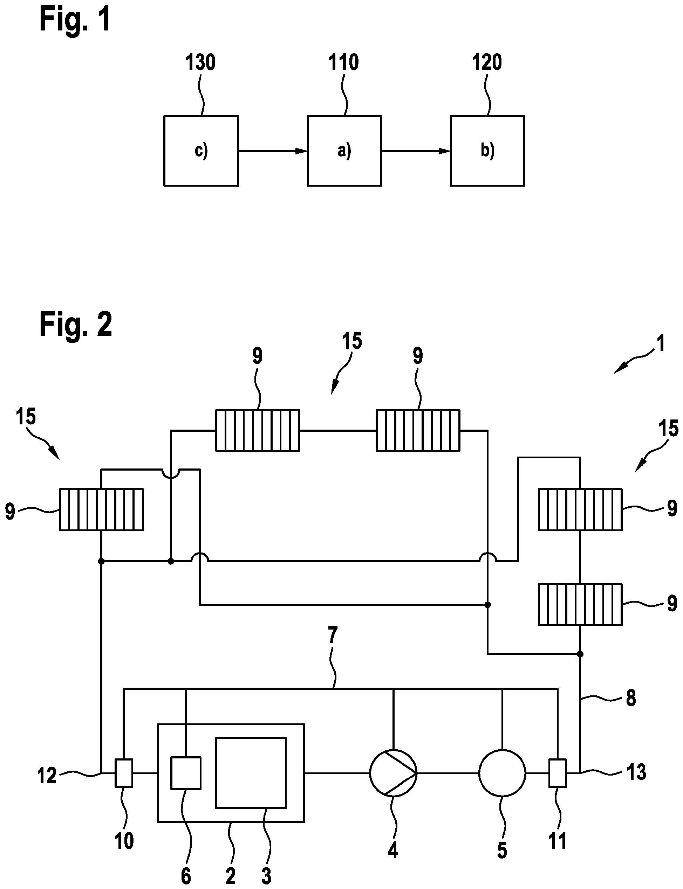

Fig. 1 zeigt beispielhaft und schematisch einen Ablauf eines hier vorgeschlagenen Verfahrens. Das Verfahren dient zum Konfigurieren bzw. Anpassen der Einstellungen einer Heizungsanlage 1, insbesondere vor einer ersten Inbetriebnahme. Die mit den Blöcken 130,110 und 120 dargestellte Reihenfolge der Schritte c), a) und b) kann sich bei einem regulären Verfahrensablauf einstellen.

Fig. 2 zeigt gleichfalls beispielhaft und schematisch eine hier vorgeschlagene Heizungsanlage 1. Die Heizungsanlage 1 kann ein Heizgerät 2 , einen Wärmeerzeuger 3 und ein Regel- und Steuergerät 6 aufweisen. Über einen Vorlauf 12 und einen Rücklauf 13 kann das Heizgerät 2 mit einem Heizkreislauf 8 verbunden sein. In mehreren Verzweigungen 15 des Heizkreislaufes 8 können ein oder mehrere Verbraucher 9 eingebunden sein, die Wärme aus dem Heizkreislauf 8 an die Umgebung abgeben können. Die Verbraucher 9 können Radiatoren, Konvektoren oder Flächenheizungen, wie Fußboden- oder Wandheizungen sein.

Das Regel- und Steuergerät 6 kann elektrisch mit einer Umwälzpumpe 4, einem im Heizkreislauf 8 angeordneten Volumenstromsensor 5 und mit einem Temperatursensor Vorlauf 10 und einem Temperatursensor Rücklauf 11 über eine elektrische Verbindung 7 verbunden sein.

In Block 130 kann in einem Schritt c) ein hydraulischer Abgleich der Heizungsanlage 1 unter Einbeziehung eines Computers erfolgen. Im Vorfeld der Durchführung des Schrittes c) können für den hydraulischen Abgleich relevante Daten und Parameter in ein Eingabegerät des Regel- und Steuergerätes 6 oder ein mobiles Endgerät, dass eine (Funk)Verbindung zu dem Regel- und Steuergerät 6 herstellen kann, eingegeben werden.

Der Computer zur Durchführung des Schrittes c) kann vorliegend das Regel- und Steuergerät 6 des Heizgerätes 2 sein. Zur Durchführung des Schrittes c) kann das Regel- und Steuergerät 6 über die Umwälzpumpe 4 einen Druck, beispielsweise in der Pumpenbetriebsart Konstantdruckregelung, aufbauen und eine Fachkraft verstellt ein in jeder Verzweigung 15 angeordnetes Drosselventil, bis sich ein in der Auslegung der Heizungsanlage 1 im Vorfeld definierter Volumenstrom für diese Verzweigung 15 einstellt. Dabei kann der Fachkraft beispielsweise über ein mobiles Endgerät, das eine Funkverbindung zu dem Heizgerät 2 oder dem Regel- und Steuergerät 6 aufbauen kann, angezeigt werden, ob sich der gewünschte Volumenstrom eingestellt hat. Bei der Durchführung des Schrittes c) kann das Regel- und Steuergerät 6 ein Protokoll führen, und wesentliche Daten auf dem Speicher des Regel- und Steuergerätes 6 ablegen. Gemäß einer zusätzlichen Funktion kann das Regel- und Steuergerät 6 ein gespeichertes Protokoll des gemäß Schritt c) durchgeführten hydraulischen Abgleichs per Nachricht versenden oder zum Abruf bereitstellen, insbesondere über ein Netzwerk.

In Block 110 kann gemäß Schritt a) ein Erfassen von Daten aus einem Protokoll eines hydraulischen Abgleichs erfolgen. Im Beispiel wurde der hydraulische Abgleich gemäß Schritt c) unter Zuhilfenahme des Regel- und Steuergerätes 6 durchgeführt, ein Erfassen der Daten gemäß Schritt a) kann somit auf einfache Weise und voll automatisiert aus dem Speicher des Regel- uns Steuergerätes 6 selbst erfolgen.

In Block 120 kann nun gemäß Schritt b) ein Konfigurieren und Abstimmen von Wärmeerzeuger 3 und Regelung der Heizungsanlage 1 anhand der in Schritt a) erfassten Daten erfolgen. Hierzu können die Daten vom Regel- und Steuergerät 6 in entsprechende Speicherpositionen geschrieben werden.

Im Ergebnis konnte auf sehr einfache Weise ein hydraulischer Abgleich durchgeführt werden, der ohnehin in vielen Ländern obligatorisch im Vorfeld einer ersten Inbetriebnahme ist. Das erfindungsgemäße Verfahren ermöglicht eine einfache und schnelle Übertragung von Daten des hydraulischen Abgleichs in die Konfiguration der Heizungsanlage 1 zu übertragen. Durch die weitreichende Automatisierung des Verfahrens können Fehleingaben aufgrund von menschlichem Versagen weitestgehend ausgeschlossen werden und zudem eine erhebliche Zeitersparnis für die Inbetriebnahme festgestellt werden.

### Bezugszeichenliste

- 1: Heizungsanlage
- 2: Heizgerät
- 3: Wärmeerzeuger
- 4: Umwälzpumpe
- 5: Volumenstromsensor
- 6: Regel- und Steuergerät
- 7: elektrische Verbindung
- 8: Heizkreislauf
- 9: Verbraucher
- 10: Temperatursensor Vorlauf
- 11: Temperatursensor Rücklauf
- 12: Vorlauf
- 13: Rücklauf
- 15: Verzweigung

## Patentansprüche

1. Verfahren zur Konfiguration einer Heizungsanlage (1) (1), umfassend zumindest die folgenden Schritte:
a) Erfassen von Daten aus einem Protokoll eines hydraulischen Abgleiches der Heizungsanlage (1),
b) Konfiguration und Abstimmung von Wärmeerzeuger (3) und Regelung der Heizungsanlage (1) anhand der in Schritt a) erfassten Daten.

2. Verfahren nach Anspruch 1, wobei in Schritt b) die in Schritt a) erfassten Daten, umfassend Parameter oder Parameterbereiche und daraus abzuleitende einzustellende Betriebsarten in entsprechende Positionen einer Datenbank des Heizgerätes (2) hinterlegt werden.

3. Verfahren nach Anspruch 1 oder 2, wobei die in Schritt a) erfassten Daten ausgewählt aus der folgenden Gruppe sind:
- eine erforderliche Wärmeleistung im Auslegungszustand,
- eine Norm-Außentemperatur am Aufstellort,
- einer erforderlich Vorlauftemperatur im Auslegungszustand,
- einem erforderlichen Volumenstrom des Wärmeträgers im Auslegungszustand,
- eine erforderliche Raumtemperatur,
- eine Fußpunkttemperatur,
- eine Heizgrenztemperatur,
- eine Temperatur Durchheizen.

4. Verfahren nach einem der vorangehenden Ansprüche, wobei die in Schritt a) zu erfassenden Daten in digitaler Form vorliegen.

5. Verfahren nach einem der vorangehenden Ansprüche, wobei in einem Schritt c) ein hydraulischer Abgleich mittels eines Computers durchgeführt wird.

6. Verfahren nach Anspruch 4 oder 5, wobei die Heizungsanlage (1) im Rahmen des Schrittes a) eine Datenverbindung zu einem Computer aufbaut, auf dem ein Protokoll eines hydraulischen Abgleichs gespeichert ist.

7. Computerprogramm, umfassend Befehle, die einen Computer dazu veranlassen, ein Verfahren nach einem der Ansprüche 4 bis 6 durchzuführen.

8. Regel- und Steuergerät (6) einer Heizungsanlage (1), welches dazu eingerichtet ist, ein Verfahren nach einem der Ansprüche 4 bis 6 durchzuführen.

9. Heizgerät (2) einer Heizungsanlage (1), aufweisend ein Regel- und Steuergerät (6) nach Anspruch 8.

10. Verwendung der Daten eines hydraulischen Abgleichs zur Konfiguration einer Heizungsanlage (1).
